# EUROPEAN PATENT SPECIFICATION

(11) **EP 3 062 458 B1**
(45) Date of publication and mention of the grant of the patent: **17.10.2018**
(21) Application number: 16156802.7
(22) Date of filing: 23.02.2016
(51) Int. Cl.: H04L 5/00, H04W 28/08

(54) **LTE/WI-FI AGGREGATION FOR EXISTING NETWORK NODES**
LTE/WI-FI-AGGREGATION FÜR BESTEHENDE NETZWERKKNOTEN
AGRÉGATION LTE/WI-FI POUR NOEUDS DE RÉSEAU EXISTANTS

(30) Priority: 27.02.2015 US 201514633403
(43) Date of publication of application: 31.08.2016
(73) Proprietor: Nokia Solutions and Networks Oy, 02610 Espoo (FI)
(72) Inventor: FORSSELL, Mika, 06750 Tolkkinen (FI)
(74) Representative: Borgström, Markus

(56) References cited:
- WO-A1-2012/154506
- US-A1- 2013 242 897
- US-A1- 2014 219 248
- US-A1- 2014 241 183

## Description

### TECHNICAL FIELD:

The teachings in accordance with the exemplary embodiments of this invention relate generally to controlling and coordinating carrier aggregation for devices and, more specifically, relate to controlling and coordinating carrier aggregation for devices such as mobile equipment over carriers including LTE and Wi-Fi carriers in a cell such as a macro cell.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- AP: access point
- API: application programming interface
- eNB: base station
- E-RAB: EUTRAN radio access bearer
- EUTRAN: evolved universal terrestrial radio access
- eNB: base station
- eNodeB: base station
- FZ: flexi zone
- HW: hardware
- GPRS: general packet radio service
- GTP: GPRS tunneling protocol
- GTP-U: general packet radio service
- GW: gateway
- HW: hardware
- ID: identification
- IP: internet protocol
- LTE: long term evolution
- LWAC: LTE/Wi-Fi aggregation controller
- MME: mobility management entity
- PDCP: packet data convergence protocol
- PGW: packet data network gateway
- QoS: quality of service
- RAN: radio access network
- RAT: radio access technology
- RLC: radio link control
- RNC: radio network controller
- SAE: system architecture evolution
- SGW: serving gateway
- SW: software
- TEID: tunnel endpoint ID
- UE: user equipment
- WiFi: wireless fidelity
- WLAN: wireless local area network

LTE Advanced offers higher data rates than prior releases. However, even though spectrum usage efficiency has improved, sometimes this alone cannot provide data rates that may be required by some users/services.

One method to achieve even higher data rates is to increase transmission bandwidths over those that can be supported by a single carrier or channel is carrier aggregation (CA), or aggregation. Using carrier aggregation it is possible to utilize more than one carrier and in this way increase the overall transmission bandwidth.

A major goal of carrier aggregation is to provide enhanced and consistent user experience across the cell such as by maximizing a peak data rate and throughput.

*Prior art which relates to this field can be found in document* US 2014/219248 A1*, disclosing systems and methods for providing multiple connections or interfaces at the same time. According to this document, a first RRC connection is established between a wireless transmit and receive unit (WTRU) or user equipment (UE) and network node such as an eNB and a second RRC connection is established between the WTRU or UE and the network node such as the eNB or another network node such as another eNB. The first RRC connection and the second RRC connections are then be maintained in parallel (e.g. at the same time).*

The exemplary embodiments of the invention as discussed herein work to at least better control and coordinate carrier aggregation for devices such as mobile equipment over carriers including LTE and Wi-Fi carriers.

### SUMMARY:

*The above mentioned objects are achieved by what is defined in the appended independent claims. Advantageous modifications thereof are set forth in the appended dependent claims.*

### BRIEF DESCRIPTION OF THE DRAWINGS:

The foregoing and other aspects of embodiments of this invention are made more evident in the following Detailed Description, when read in conjunction with the attached Drawing Figures, wherein:
Figure 1 is a diagram illustrating an example of a User Equipment (UE) in partially overlapping cells;
Figures 2A and 2B each show a technical alternative for LTE/Wi-Fi aggregation following accepted LTE dual connectivity selections;
Figure 3 shows a simplified block diagram of devices configured to perform operations in accordance with the exemplary embodiments of the invention;
Figure 4 shows a network architecture to support LTE/Wi-Fi aggregation with existing networks when different aggregation alternatives are used for a non-collocated aggregation model;
Figure 5 shows an example protocol and function distribution, and operation of relevant elements in accordance with the exemplary embodiments of the invention;
Figure 6 shows example simplified messaging related to LTE/Wi-Fi aggregation activation in accordance with the exemplary embodiments of the invention; and
Figure 7 shows a method in accordance with the exemplary embodiments which may be performed by an apparatus.

### DETAILED DESCRIPTION:

In this invention, we propose at least a method and apparatus to better control and coordinate carrier aggregation for devices such as mobile equipment over carriers including LTE and Wi-Fi carriers in a cell such as a macro cell.

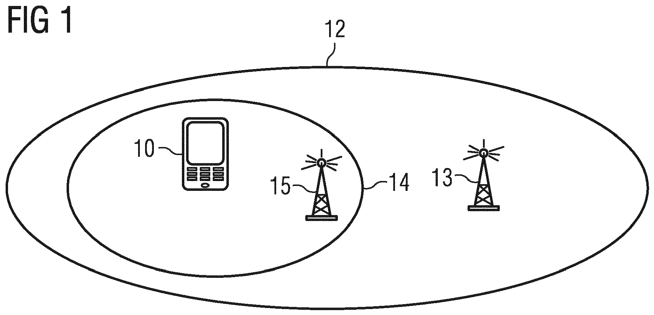

Referring also to Figure 1, a UE 10 may be connected to more than one cell at a same time. In this example the UE 10 is connected to a PCell 12 through a base station 13 (such as an eNB for example) and a SCell 14 through a base station 15 (such as an eNB or Wi-Fi Access Point for example). The two cells 12, 14 are, thus, at least partially overlapping. The PCell 12 may operate on a licensed band or unlicensed band and similarly the SCell 14 may operate on a licensed or unlicensed band, such as ISM bands. In certain scenarios, the SCell may operate also on licensed band(s). The PCell may be either a FDD cell or TDD cell for example. For simplicity, there are just one PCell and one SCell depicted in the scenario shown in Fig. 1. In other alternate examples any number of cells (PCell and SCell) operating on licensed and/or unlicensed band(s) may be provided to work together for a suitable Carrier Aggregation (CA). For example when UE uses licensed LTE, unlicensed LTE and Wi-Fi connections may be activated to perform aggregation over the three radio technologies to reach highest bit rates when seen feasible and UE and network support this. A Wi-Fi link in accordance with the exemplary embodiments can be utilized in an unlicensed band, unless also licensed variant is specified. In one type of example embodiment the PCell and SCell may be co-located.

It is noted that 3GPP rel-13 and beyond can include LTE/Wi-Fi aggregation technology where an eNB manages UE mobility but can utilize Wi-Fi as a second carrier for data transmission (Wi-Fi as data pump), for example to increase peak bit rate. The new use cases enabled include e.g. carrier aggregation, complete network control of available resources and dynamic radio resource usage based on load and radio quality. LTE PDCP or even RLC is expected to be used on top of Wi-Fi stack multiplexing PDCP/RLC blocks over LTE and Wi-Fi radios and de-multiplexing received packets to form once again complete IP packets despite if both LTE and Wi-Fi are used. Another main alternative is to use Serving GW to distribute selected traffic over LTE access and other traffic over Wi-Fi access. The exemplary embodiments of the invention can be applied to any of these scenarios.

Further, it is noted that LTE/Wi-Fi aggregation may not benefit all data traffic to or from a UE or other device. For example 64 kbit/s Internet radio experience may remain the same despite an LTE/Wi-Fi radio bit rate being 64 kbit/s or 300 Mbit/s. In this case using both LTE and Wi-Fi for 64 kbit/s Internet radio would not benefit data traffic but instead may simply waste UE resources e.g., battery power. On the other hand downloading/uploading large files, like videos, can benefit from a usage of both LTE and Wi-Fi radio carriers. Thus, there can be seen a clear advantage to determine optimal times to perform a carrier aggregation such as LTE/Wi-Fi aggregation and as such utilize and control available radio resources most efficiently. However, this is presently not the case and so the exemplary embodiments provide at least a method to address at least these shortfalls.

As similarly stated above LTE/Wi-Fi aggregation is driven into 3GPP release 13 and has received plenty of operator support. In LTE/Wi-Fi aggregation LTE handles mobility mechanisms and is able to use Wi-Fi as data pump (DL & UL) when beneficial. This is expected to bring several benefits, like LTE + Wi-Fi bit rates (e.g., > 1 Gbps), full network control and flexibility on radio to allocate traffic into LTE and Wi-Fi radios based on RF and load. It is noted that LTE/Wi-Fi aggregation is not seen to be changing 802.11 (Wi-Fi radio towards UE).

Majority of operators are expected to start LTE/Wi-Fi aggregation using collocated model where an LTE/Wi-Fi pico, for example having the two radios in small cell base station, supports the aggregation. However, there are also operators who expect non-collocated deployments where macro eNB coordinate aggregation with external Wi-Fi APs over standardized interface.

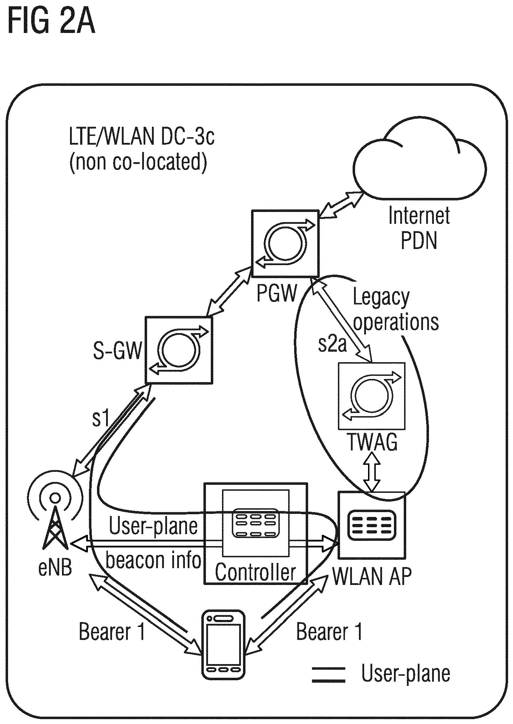

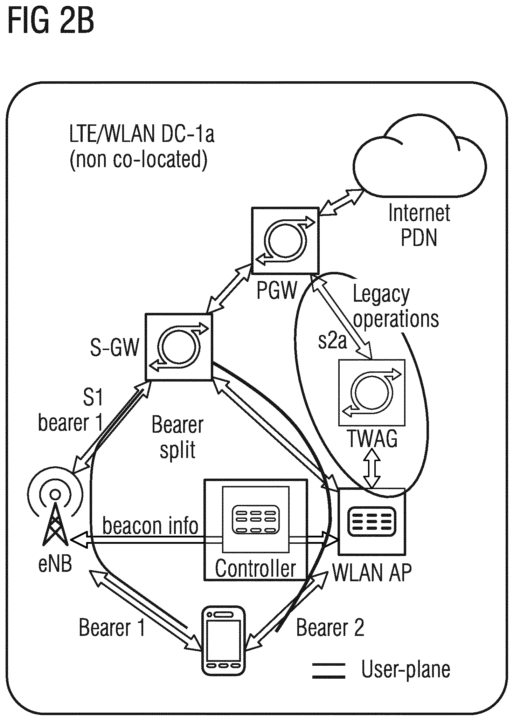

Figure 2A and Figure 2B each show a technical alternative to perform LTE/Wi-Fi aggregation. Main difference is whether eNB needs to handle Wi-Fi user traffic or not and how optimized operation is targeted (the DC-3c technical alternative as shown in the Figure 2A is expected to provide performance gains over the DC-1a technical alternative as shown in Figure 2B).

In non-collocated models where an approach such as labeled DC-3c as shown in Figure 2A is used (e.g., LTE PRCP or RLC is used on top of Wi-Fi) a macro eNB needs to handle Wi-Fi user plane traffic. Today one 802.11ac Wi-Fi AP can already transfer 1.3 Gbps (theoretical) and depending on macro cell coverage area one eNB may have numerous Wi-Fi APs under cell area. Thus it's clear that non-collocated case will set huge performance requirements to eNB HW if an operator of the eNB expects utilization of full speeds. It is noted that an operator may not be able to support full speeds in cell area for some time as HW evolution will take time. Still, by being able to apply LTE/Wi-Fi aggregation using existing macro eNBs there can be a clear value add to an operator solution. The Exemplary embodiments of the invention work to provide at least this benefit.

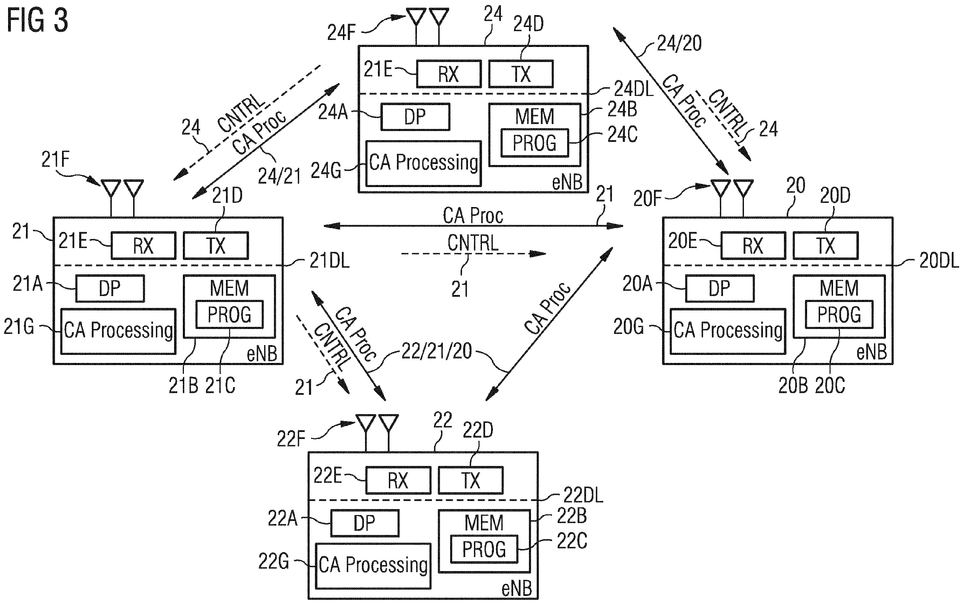

In accordance with the exemplary embodiments of the invention as described herein there is carrier aggregation control including sharing and coordinating responsibilities of LTE packet data convergence protocol and/or radio link control protocols as part of carrier aggregation. Each of the exemplary embodiments of the invention as described herein can be performed at least by devices such as devices as shown in Figure 3 which can be adapted to utilize at least these exemplary aspects of the invention.

The exemplary embodiments of the invention provide a novel controller/GW element, herein which may be called an LTE/Wi-Fi Aggregation Controller (LWAC). The exemplary controller performs operations including relaxing aggregation performance requirements for LTE eNB macro. When LTE/Wi-Fi aggregation is enabled for a UE, Wi-Fi is made as secondary/new bearer(s) and eNB can coordinate with SGW and LWAC to direct selected bearers towards LWAC. LWAC will then contain functionality to perform aggregation and direct selected traffic to Wi-Fi and other traffic to LTE.

It is noted that in this document an example of a bearer is LTE bearer grouping messages related to user data and having similar characteristics (e.g. QoS profile, APN (Access Point Name) into one identified instance having bearer ID. Further, in accordance with the exemplary embodiments a bearer can also be UDP/TCP connection specific, application specific (which may group multiple UDP/TCP connections of an application), share a common IP characteristics (like DSCP code) etc. and thus any reference to the term bearer in this document is not limited to an LTE bearer or its definition thereof. Further, in this the regard the term bearer can be used to refer to a wireless network bearer but is also not limited as such. A wireless bearer in accordance with the exemplary embodiments may be a bearer for wireless connections such as connections based on, but not limited to, standards such as 802.11a, 802.11b, 802.11g and/or 802.11n.

Before describing the exemplary embodiments of the invention in further detail reference is now made to Figure 3. Figure 3 illustrates a simplified block diagram of various electronic devices and apparatus that are suitable for use in practicing the exemplary embodiments of this invention. In Figure 3 there is shown a LTE/Wi-Fi aggregation controller (LWAC) which can be adapted to perform operations in accordance with the exemplary embodiments of the invention. As shown in Figure 3 an LWAC 24 is adapted for communication over at least wireless links (not specifically shown) with mobile apparatuses, such as mobile terminals including a device such as UE 22, and/or other devices such as WLAN 20 and ENB 21. In addition, in accordance with the exemplary embodiments an LWAC, such as the LWAC 24, may be embodied in any network device including a base station such as the eNB 21 and/or may be embodied as a macro eNodeB (a base station of an E-UTRAN system and/or 5G system), a WLAN access point, a femto eNodeB, pico eNodeB, Serving GW, a server, or other type of node or apparatus associated with a network and adapted to perform the exemplary embodiments as discussed herein.

As illustrated in Figure 3, the LWAC 24 includes its own processing means such as at least one data processor (DP) 24A, storing means such as at least one computer-readable memory (MEM) 24B storing at least one computer program (PROG) 24C, and communicating means such as a transmitter TX 24D and a receiver RX24E for bidirectional wireless communications with user devices WLAN 20, ENB 21, and/or UE22 or any other network device via its antenna 24F. The LWAC 24 stores at block 24G in its local MEM 24B carrier aggregation (CA) processing code to perform the carrier aggregation activating, controlling, and/or coordinating in accordance with the exemplary embodiments.

The eNB 21 similarly includes processing means such as at least one data processor (DP) 21A, storing means such as at least one computer-readable memory (MEM) 21B storing at least one computer program (PROG) 21C, and communicating means such as a transmitter TX 21D and a receiver RX 21E for bidirectional wireless communications with the UE 20, LWAC 24, and/or the WLAN 20 of Figure 3 as well as the other apparatus or other network device via one or more antennas 21F. The eNB 21 stores in its local MEM 21B at block 21G computer program code for CA processing to perform at least the exemplary carrier aggregation controlling processing, for performing the exemplary operations based on data packets it receives, such as from the UE 22 and/or LWAC 24, and to utilize that processing such as for activating, controlling, and/or coordinating carrier communications.

The WLAN 20 includes processing means such as at least one data processor (DP) 20A, storing means such as at least one computer-readable memory (MEM) 20B storing at least one computer program (PROG) 20C, and also communicating means such as a transmitter TX 20D and a receiver RX 20E for bidirectional wireless communications with any of the LWAC 24, the eNB 21, and/or the UE 22 via one or more antennas 20F. The RX 20E and the TX 20D are each shown as being embodied in a radio-frequency front end chip, which is one non-limiting embodiment. The WLAN 20 also has stored in the MEM 20B at block 20G computer program code for CA processing to perform at least the exemplary Wi-Fi operations as discussed herein.

The UE 22 includes processing means such as at least one data processor (DP) 22A, storing means such as at least one computer-readable memory (MEM) 22B storing at least one computer program (PROG) 22C, and communicating means such as a transmitter TX 22D and a receiver RX 22E for bidirectional wireless communications with the LWAC 24, WLAN 20, and/or the eNB 21 of Figure 3 as well as the other apparatus or other network device via one or more antennas 22F. The UE 22 also has stored in its local MEM 22B at block 22G the computer program code for CA processing to perform at least the exemplary CA operations as discussed herein.

In accordance with the exemplary embodiments of the invention, there can be CA processing information such as indicated by arrows 24/21, 24/20, and 22/21/20 CA proc which may be used by the LWAC 24, ENB 21, UE22, and/or WLAN 20 to perform the operations in accordance with the exemplary embodiments. Further, this information can include control signaling such as illustrated by the dashed line arrows 25 CNTRL and 21 CNTRL from the LWAC and eNB 21, respectively. Further, each of the steps as disclosed herein including the carrier aggregation controlling may be based on information detected and/or shared by the WLAN 20, ENB 21, UE22, and LWAC 24 or information received via the antenna 20F, 21F, 22F, and/or 24F as well as associated receivers RX 20E, 21E, 22E, and 24E. Such information from any one or more of the WLAN 20, ENB 21, UE22, and/or the LWAC 24 can be processed and implemented by at least one of the PROGs 20C, 21C, 22C, and/or 24C in the respective device WLAN 20, ENB 21, UE22, and/or LWAC 24. Each of the PROGs 20C, 21C, 22C, and/or 24C is assumed to include program instructions that, when executed by the associated DP 20A, 21A, 22A, and/or 24A enable the device to operate in accordance with the exemplary embodiments of this invention to perform the operations as detailed herein. Blocks 20G, 21G, 22G, and 24G summarize different results from executing different tangibly stored software to implement certain aspects of these teachings. In these regards the exemplary embodiments of this invention may be implemented at least in part by computer software stored on the MEM 20B, 21B, 22B, and/or 24B which is respectively executable by DP 20A, 21A, 22A, and 24A, or by hardware, or by a combination of tangibly stored software and hardware (and tangibly stored firmware).

In addition, the dashed lines 20DL, 21DL, 22DL, and 24DL of Figure 3 indicate that the radio parts of the WLAN 20, eNB 21, UE 22, and/or LWAC 24 are not essential and may be separate from at least a processor and carrier aggregation control instructions of the LWAC 24, WLAN 20, and/or ENB 21 of Figure 3. Each of the RX24E, TX 24D, and antenna 24F; the RX20E, TX20D and antenna 20F; the RX21E, TX21D and antenna 21F; and/or the RX22E, TX22D and antenna 22F, of the LWAC 24, WLAN 20, eNB 21 and/or UE 22, respectively, are not essential to the operations in accordance with the exemplary embodiment of the invention. In accordance with a non-limiting exemplary embodiment of the invention the LWAC 24, WLAN 20, ENB 21, and/or UE 22 may be coupled to external radio parts for sending or receiving signaling via circuitry such as integrated circuitry.

Electronic devices implementing these aspects of the invention need not be the entire devices as depicted at Figure 3, but exemplary embodiments may be implemented by one or more components of same such as the above described tangibly stored software, hardware, firmware and data processor.

Various embodiments of the computer readable MEMs 20B, 21B, 22B, and 24B include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DPs 20A, 21A, 22A, and 24A include but are not limited to general purpose computers, special purpose computers, microprocessors, digital signal processors (DSPs) and multi-core processors.

It is noted that the communications and/or operations as described below for Figure 3 are non-limiting to the exemplary embodiments of the invention. The devices and the related operations are merely illustrative of devices for use in practicing the exemplary embodiments of this invention. Any of these operations can be performed using any suitable device including any of the devices shown in Figure 3. Further, the operations as described below may be performed in a different order and/or by different devices than what is described.

The exemplary embodiments of the invention provide at least a novel method and apparatus to share and coordinate responsibilities of LTE PDCP and/or RLC protocols between LWAC and eNB as part of the aggregation. LWAC shall host LTE PDCP, maybe also RLC (depending on standardization/implementation, e.g. if common LTE RLC is used for LTE and Wi-Fi then LWAC may handle also RLC protocol). Further LWAC and eNB may coordinate activation and usage of PDCP and RLC in eNB and LWAC elements. For example when aggregation is activated, LWAC PDCP handles PDCP operation and delivers data over LTE and Wi-Fi where eNB PDCP remains unused (LWAC PDCP interfaces directly eNB RLC API) or operates in transparent mode (to stay in sync of delivery and optionally assist RLC locally).

The exemplary embodiments of the invention provide benefits which also include that an LWAC or eNB may monitor LTE and Wi-Fi performance in order to be able to maximize usage of the two radios. For example in case one of the radios starts performing poorly LWAC may decide to deactivate usage of the radio for a UE.

In accordance with the exemplary embodiments existing macro eNB HW can be used as part of the aggregation, only SW update is needed to support cooperation with LWAC. Wi-Fi user plane traffic as part of the aggregation is not routed via eNB but via the LWAC which can be based on e.g. RNC or PGW HW providing plenty of processing capacity. Despite that LTE/Wi-Fi aggregation operates in optimum level and the operations are shared between LTE and Wi-Fi models (e.g., see of approach labelled as DC-1a of Figure 2B and approach labelled as DC-3C of Figure 2A) the exemplary embodiments can provide benefit for aggregation capable networks. Further the same principles and mechanisms could be utilized for LTE Dual Connectivity to relax macro eNB performance requirements when sending data to UE over macro and small cells eNB.

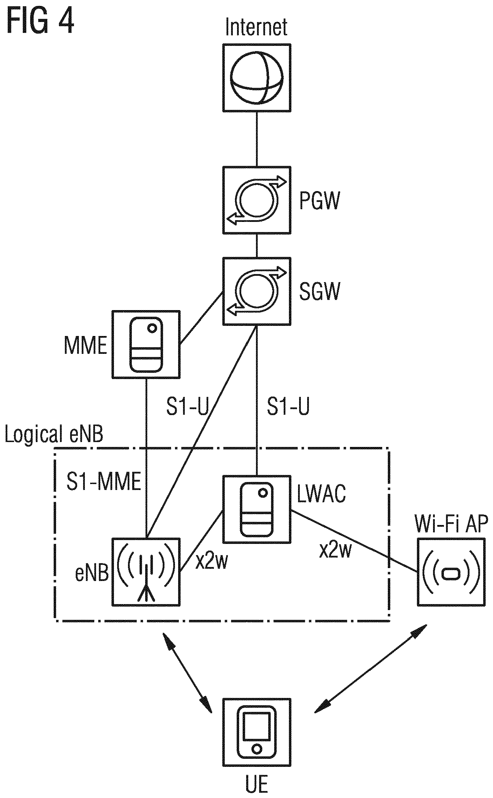

Referring to Figure 4 there is shown a network architecture to support cellular network/Wi-Fi aggregation with existing networks when (e.g., 3C or 3D) aggregation alternatives are used for a non-collocated model. It is noted that any reference in this paper to a particular cellular network carrier or technology, such as an LTE carrier or technology, is non-limiting. In accordance with the exemplary embodiments of the invention a cellular network carrier or technology which may be used can be any cellular network carrier or technology, including but not limited to LTE, 4G, 5G and future cellular network carriers or technologies operating in a licensed and/or unlicensed spectrum. Further, in this regard the reference to the LTE/Wi-Fi aggregation controller is none limiting for similar reasons. The LTE/Wi-Fi aggregation controller may be used for any cellular network carrier or technology and is not limited to long term evolution (LTE) use.

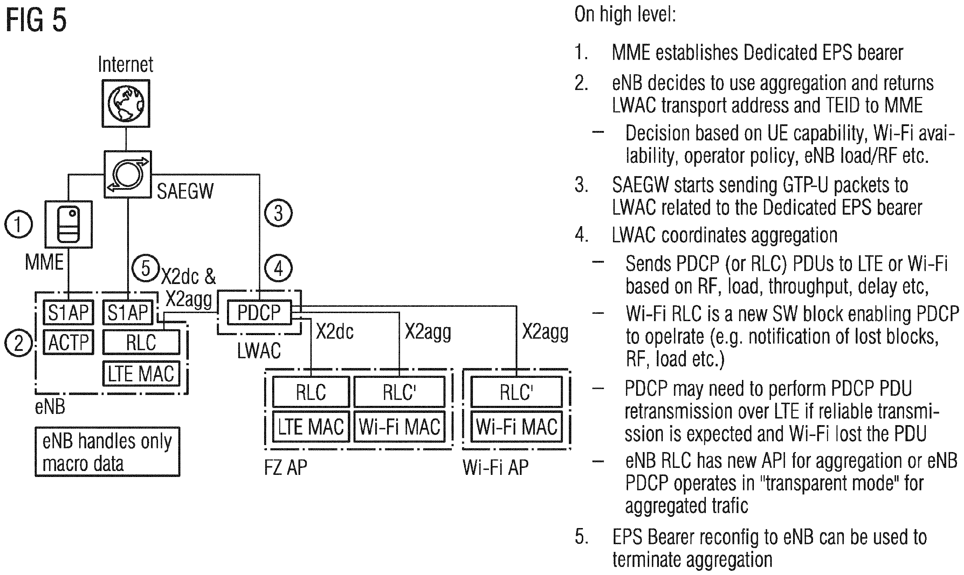

Figure 5 shows an example protocol and function distribution, and operation of relevant elements in accordance with the exemplary embodiments. NOTE the same architecture could be used also as part of LTE Dual Connectivity technology (dc), which however is not handled in detail in this document (same procedures could be reused for DC to relax eNB performance requirements for that as well). FZ AP means Flexi Zone AP with LTE pico and Wi-Fi radios.

Figure 5 describes one potential scenario for LTE/Wi-Fi aggregation where LTE PDCP (with some enhancements on top of existing PDCP) is used commonly on top of LTE and Wi-Fi radios. In this scenario LTE eNB uses a normal existing LTE RLC protocol. It is noted that Wi-Fi has RLC' which performs necessary functions allowing LTE PDCP to operate, for example notifies PDCP blocks which couldn't be transmitted over Wi-Fi radio (e.g., lost blocks etc. as RLC is expected to provide reliable radio transmission for selected traffic). Depending on standardized operation, Wi-Fi may be also used in a so called opportunistic mode where RLC' implements mainly an interface to allow eNB/LWAC to transfer PDCP/RLC PDUs to Wi-Fi but without providing feedback e.g. if PDU was successfully transmitted or not to eNB/LWAC. Both modes are covered by the invention. As shown in Figure 5 at item 1 an MME establishes Dedicated EPS bearer. At item 2 an eNB decides to use aggregation and returns LWAC transport address and TEID to the MME. Here, a decision is made based on at least one of the UE capability, Wi-Fi availability, operator policy, eNB load/RF, Wi-Fi load/RF (if known), QoS profile, application awareness and/or characteristics (e.g. long lasting download, large frequent packets) etc. At item 3 an SAE GW starts sending GTP-U packets to the LWAC related to the dedicated EPS bearer. Then at item 4 the LWAC coordinates aggregation including sending PDCP (or RLC) PDU's to LTE or Wi-Fi (e.g., based on RF, load, throughput, delay etc.) where the Wi-Fi RLC is a new SW block enabling PDCP to operate (e.g., notification of lost blocks, RF, load, performance, and queueing delays etc.). The PDCP may need to perform PDCP PDU retransmission over LTE if reliable transmission is expected and/or if Wi-Fi lost the PDU. Likewise if LTE radio is poor a PDCP PDU might be retransmitted over Wi-Fi. The eNB RLC may have a new API for aggregation and enabling communication with the LWAC or existing PDCP API may be used. eNB PDCP may be bypassed where LWAC communicates directly with eNB RLC or eNB PDCP may operate in "transparent mode" for aggregated traffic meaning eNB PDCP passes PDUs but doesn't apply normal operations of LTE PDCP to the traffic. At item 5 there is EPS Bearer reconfigure message to an eNB that can be used to terminate aggregation. NOTE: Although packet routing between LWAC and EPC based Dedicated EPS bearer is used as an example, aggregation may be enabled for other communication instances as well. For example aggregating traffic related to APN (Access Point Name), applying 5-tuples (IP address, TCP/UDP port, ...) in determining which traffic is aggregated, redirecting IP packets belonging to specific application or TCP flow to one of the radios etc.

In addition example exemplary operations can be described as follows:

### Aggregation activation

When UE attaches to LTE network or when UE or network decides to establish an EPS bearer/session or Dedicated EPS bearer, MME and eNB communicate to activate relevant bearers over S1 interface. In accordance with the exemplary embodiments the term S1 interface or protocol is non-limiting and the operations associated with the S1 interface and/or protocol in this paper may be performed using any interface between network elements which is relaying user data. During bearer establishment, eNB may decide to use LTE/Wi-Fi aggregation. The decision may be based on operator configured policy, QoS characteristics, UE radio access capability, network performance (like load), Wi-Fi availability under cell area, application awareness and/or characteristics etc.

In case eNB decides to activate LTE/Wi-Fi aggregation, before responding to MME eNB communicates with LWAC. The eNB sends e.g. QoS, UE (e.g. capability), traffic and RF/load (of LTE and Wi-Fi if available) related parameters to LWAC and asks for aggregation activation. In case LWAC accepts aggregation activation, LWAC sends to eNB transport and TEID (GTP Tunnel End point ID (identifier)). In addition, LWAC and eNB may negotiate internal details for supporting aggregation, like eNB address information used by LWAC when delivering PDCP/RLC PDU to eNB, whether to use eNB PDCP or RLC API for packets etc. LWAC may also deny use of aggregation. For example LWAC may be implemented as virtualized SW on COTS HW and if there are already too many aggregation instances ongoing the LWAC may not have enough resources to support the requested new aggregation. In such a case eNB may continue transmission over LTE only or redirect the UE to use Wi-Fi (e.g. by using 3GPP release 12 WLAN Radio Interworking functionality). Also LWAC may know through prior communication the load of Wi-Fi AP/network and thus reject support for aggregation towards specific AP.

After communicating with LWAC eNB responds to MME. In case aggregation is to be used for the traffic related to the bearer being activated, eNB provides LWAC transport and TEID information to MME which provides the information further to SGW. This makes SWG to send user data packets related to the bearer to LWAC instead of eNB.

NOTE: Decision to use aggregation may be done even if it's known that currently UE doesn't have Wi-Fi available or for example available Wi-Fi is congested and thus UE has to wait for use of the Wi-Fi. By knowing cell area has Wi-Fi coverage preparations to perform aggregation may be done beforehand and LWAC starts distributing traffic between LTE and Wi-Fi only when UE has both radios available. Until Wi-Fi is available or decided to be used, for example LWAC may perform LTE PDCP functionality and send PDUs to eNB RLC to process further.

In addition, LTE/Wi-Fi aggregation may be activated during ongoing data transmission where eNB is already communicating with the UE. An S1 AP protocol included with the communications can contain for example a Path Switch procedure allowing eNB to change a data communication end point. Thus, in case eNB decides to activate aggregation function, eNB can utilize the Path Switch to notify SGW (via MME) he transport and TEID information of LWAC causing all/selected traffic to be transmitted via LWAC.

### Aggregation operation

In the following the operation of LWAC, eNB and Wi-Fi (Controller and/or AP) are described as part of LTE/Wi-Fi aggregation operation.

LWAC distributes traffic between LTE and Wi-Fi radios. There are several potential protocol and functional divisions between eNB, LWAC and Wi-Fi. An example scenario including the exemplary embodiments of the invention is described.

As previously and similarly stated with regards to Figure 5 describes a potential scenario for LTE/Wi-Fi aggregation where LTE PDCP (with some enhancements on top of or linked to existing PDCP) is used commonly with LTE and Wi-Fi radios. Below, PDCP LTE eNB may use a normal existing LTE RLC protocol. Wi-Fi has RLC' which performs necessary functions allowing LTE PDCP to operate, for example notifies PDCP blocks which couldn't be transmitted over Wi-Fi radio (e.g., lost blocks etc. as LTE RLC is expected to provide reliable radio transmission for selected traffic).

In the example an eNB is configured to operate in a mode where eNB PDCP is not used for aggregated traffic at all and eNB LTE RLC provides an API to interact directly with LWAC PDCP. Another option is to route LWAC PDCP packets via eNB PDCP acting in (nearly) transparent mode. For example a UE may have bearers using aggregation (Initial/Dedicated bearer) and bearers not using aggregation (other (Initial/Dedicated bearer). Or UE may have aggregation applied only to downlink or uplink traffic. For bearer(s) not using aggregation, an existing eNB PDCP may be used normally. Having knowledge of aggregated traffic as well the eNB PDCP may be able to optimize its' operation (e.g., by just staying in sync of what's going on in the aggregated traffic and following LWAC PDCP control information etc.). For example eNB PDCP may monitor LWAC managed PDCP PDU sequence numbering and eNB RLC queue status (if available) to determine how much traffic goes over LTE and Wi-Fi (gaps in consequent sequence numbering reveal the PDU has been assigned to Wi-Fi) to influence on eNB scheduling decisions where feasible (together with other input, like assigned QoS profile). Aggregation works the best when used radios perform close enough equally well. Likewise Wi-Fi may use the RLC(') to monitor PDCP PDU sequence numbering that may be used to influence traffic prioritization within the Wi-Fi AP (for example by affecting Wi-Fi AP scheduling decisions part of Wi-Fi Multimedia). LWAC may also distribute/share performance/scheduling information across used radios in order to improve sync between the two radios and similar performance for PDUs related to a bearer. Otherwise if performance of the too radios is too different, receiving PDCP operation is not optimum as PDUs arrive out of sync and receiving PDCP may not be able to tell efficiently when PDU has been lost (and when received PDUs shall be processed forward despite of the lost PDU).

When LWAC receives downlink packet from SGW, LWAC makes a decision whether to send the packet over LTE or Wi-Fi radio. The decision can be based on for example known RF characteristics of the two radios, detected link throughput, transmission (queue) delay, load conditions, traffic type, error rate on radio etc. Also if LWAC (/PDCP) is able to monitor traffic and detects an important IP packet, like TCP ACK allowing the transmission window to progress or reference frame in video compression, the packet may be directed over LTE to ensure reliable delivery of the packet as that may have direct impact on user experience.

In case LWAC decides to route the packet via LTE, then for example normal LTE PDCP and RLC functions may be used. An eNB RLC and LWAC PDCP may operate using normal LTE procedures or optimized communication may be used where e.g. RLC reports to PDCP are piggy packed or linked to larger messages.

In case LWAC decides to route the packet via Wi-Fi, LWAC sends the packet to Wi-Fi network. Wi-Fi network (e.g., WLAN Controller, Wi-Fi AP etc. depending on implementation) shall have RLC' protocol that is able to communicate with the PDCP protocol and enable PDCP operation. For example in accordance with the exemplary embodiments a wi-fi carrier can be configured, in case PDCP block delivery via Wi-Fi radio is unsuccessful, such that RLC' shall notify PDCP about it. For example, in accordance with the exemplary embodiments there may be a RLC status report from a receiving Wi-Fi entity, such as a Wi-Fi AP running RLC, and the transmitting side of the LWAC shall if the status report indicates so retransmit data associated with the RLC over an LTE entity. Such a status report may be using positive or negative acknowledgement type signaling. However, this operation using the RLC is non-limiting and the opportunistic approach as described above with regards to Figure 5 may also or instead be used. In such a case LWAC PDCP needs to include new functionality on top of or linked to a traditional LTE PDCP functionality to be able to retransmit the PDCP block over LTE radio (if retransmission is needed).

On UE side PDCP collects PDCP blocks received over Wi-Fi and LTE radios and ensures in-sequence deliver to upper layers.

When LWAC receives PDCP PDU from RLC (LTE) or RLC' (Wi-Fi) in uplink direction, the PDCP collects the PDUs and delivers them to higher layers (SGW) in-sequence.

### Aggregation deactivation

LTE/Wi-Fi aggregation may be deactivated as part of bearer release. Also during ongoing operation eNB, Wi-Fi or LWAC may decide to deactivate aggregation. In such a case LWAC is notified which initiates path changes. For example in case UE loses Wi-Fi coverage or Wi-Fi is not performing well (temporary interference for the UE, AP is congested), LWAC may deactivate aggregation and initiate procedures towards MME (and SGW) to move bearer traffic to eNB.

Network elements (like eNB, pico, MME and SGW) can be used to detect if bearer user plane traffic is going via intermediate element (LWAC) as part of aggregation.

Technology may also be standardized (e.g. interface and function split between macro eNB and LWAC type of intermediate element).

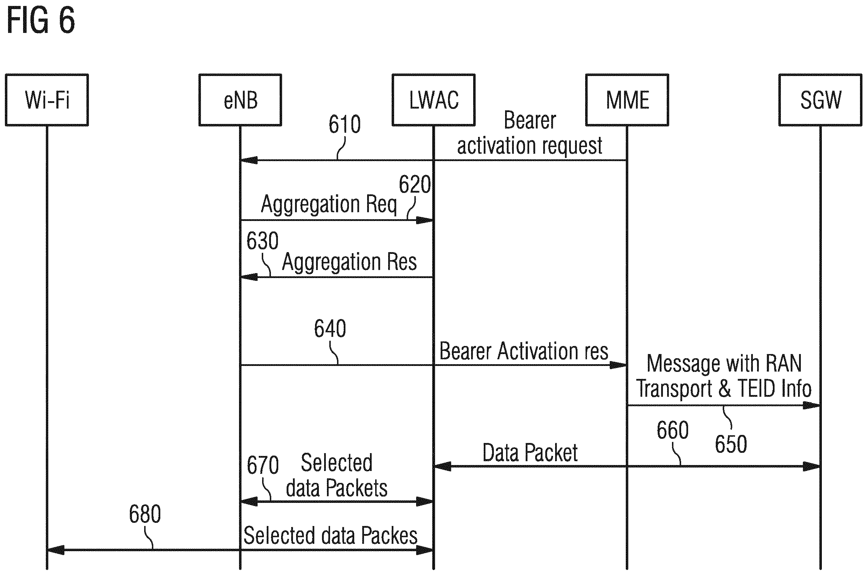

Figure 6 illustrates an example flow chart of simplified messaging related to LTE/Wi-Fi aggregation activation in accordance with the exemplary embodiments of the invention. It is noted that not all these operations or steps of Figure 6 may be performed. Further, a placement or numbering of these operations or steps of Figure 6 is not limiting and the operations or steps may be performed in a different order. As shown in step 610 a bearer request is sent from an MME towards an eNB. At step 620 an aggregation request for the bearer activation is sent from the eNB towards the LWAC. Then at step 630 the LWAC sends an aggregation request response to the eNB. This response can be based any of the determination conditions/factors as described herein. At step 640 the eNB send a bearer activation response to the MME. Then at step 650 a message with RAN transport information and a tunnel endpoint ID (TEID) information is sent towards an SGW. Then at step 660 the SGW forwards data packets for the bearer towards the LWAC. After which selected data packets are aggregated to the eNB and to the Wi-Fi AP as shown in steps 670 and 680.

It is noted that the communications and/or operations as described in Figures 1, 2A, 2B, 3, 4, 5, and/or 6 are non-limiting to the exemplary embodiments of the invention. The devices and the related operations are merely illustrative of devices and operations for use in practicing the exemplary embodiments of this invention. Further, any of these operations can be performed using any suitable device including an LWAC device, a base station, and/or mobile user equipment as shown in Figure 3. Further, the operations as described below may be performed in a different order and/or by different devices than what is described. Such device can include, but are not limited to, smartphones, tablets, and PDAs. Further, the exemplary embodiments of the invention may be practiced in any device such as a device with an LTE interface.

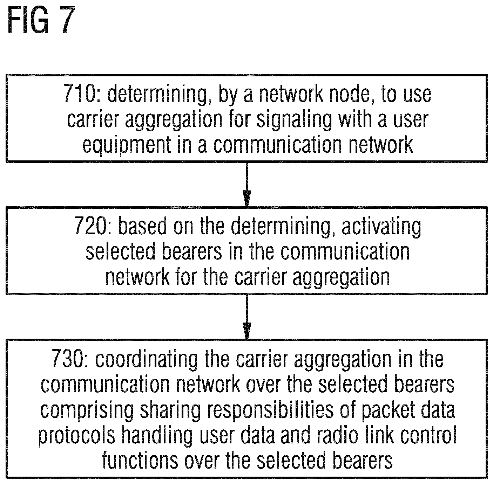

Figure 7 illustrates operations which may be performed by a network device such as, but not limited to, a CA processing device an apparatus, and/or a network node (e.g., the CA processing device 20G, 21G, 22G, and/or 24G as in Fig. 3) and/or a network device (e.g., the eNB 21, LWAC 24, UE 22, and/or WLAN 20 as in Fig 3). As shown in step 710 of Figure 7, there is determining, by a network node, to use carrier aggregation for signaling with a user equipment in a communication network. At step 720 there is, based on the determining, activating selected bearers in the communication network for the carrier aggregation. Then at step 730 there is coordinating the carrier aggregation in the communication network over the selected bearers, comprising sharing responsibilities of packet data protocols handling user data and radio link control functions over the selected bearers.

In accordance with the exemplary embodiments as described in the paragraph above, the selected bearers comprise a cellular network carrier and a wireless fidelity carrier.

In accordance with the exemplary embodiments as described in the paragraph above, the coordinating comprises: linking a functionality of packet data protocols handling user data and radio link control functions over the long term evolution carrier and the wireless fidelity carrier, wherein radio link control reports are added to the signalling, and wherein if the reports indicate a routing of a data packet over one of the long term evolution carrier or the wireless fidelity carrier is unsuccessful the linked functionality is adapted to enable retransmitting the data packet over another of the long term evolution carrier or the wireless fidelity carrier.

In accordance with the exemplary embodiments as described in the paragraphs above, the determining is based on at least of one of a signal strength, error rate, and interference rate of the cellular network carrier and the wireless fidelity carrier.

In accordance with the exemplary embodiments as described in the paragraphs above, the determining is based on at least of one of a signal strength, error rate, and interference rate of the cellular network carrier and the wireless fidelity carrier, and at least one of an operator of the communication network policy configured at the network node, quality of service characteristics associated with the user equipment; radio access capabilities of the user equipment; network performance of a cell, and an availability of a selected carrier for the carrier aggregation.

In accordance with the exemplary embodiments as described in the paragraphs above, the signaling comprises a bearer establishment request by the user equipment and wherein the carrier aggregation is used for the bearer establishment.

In accordance with the exemplary embodiments as described in the paragraphs above, the activating comprises communicating tunnel endpoint identification information over an interface between network elements relaying user data with a mobility management entity of the communication network to activate the selected bearers, wherein the information is provided by the mobility management entity to a serving gateway of the communication network for the coordinating to direct the selected bearers towards the network node for the carrier aggregation.

In accordance with the exemplary embodiments as described in the paragraphs above, the coordinating comprises, for each data packet of the signaling, identify which of the selected carriers to route the data packet over for the carrier aggregation.

In accordance with the exemplary embodiments as described in the paragraphs above, the identifying is based on a traffic type of the signaling, and wherein the identifying is based on at least one of a radio frequency characteristic, detected throughput, delay, and load condition of the wireless fidelity carrier.

In accordance with the exemplary embodiments as described in the paragraphs above, the network node is configured to operate in one of: a mode wherein packet data protocols handling user data are not used for the carrier aggregation and an radio link control of the network node provides an application programming interface to interact directly with an aggregation controller of the network node, and a mode where packet data protocols handling user data packets for the carrier aggregated signaling are sent via the network node acting in a transparent mode.

In accordance with the exemplary embodiments as described in the paragraphs above, the activating is during an ongoing data transmission between the apparatus and the user equipment, and there is determining a loss of coverage of a selected bearer during the ongoing data transmission; and in response, deactivating the carrier aggregation using that selected bearer, wherein the deactivating comprises communicating with a mobility management entity using an interface between network elements relaying user data to move the signaling from the selected bearer with the loss of coverage.

In accordance with the exemplary embodiments as described in the paragraphs above, the network node is embodied in an LTE/Wi-Fi aggregation controller associated with a base station serving a macro cell in the communication network.

In accordance with an exemplary embodiment of the invention as described above there is means for determining [CA processing 24G, 21G, 22G, and/or 20G], by a network node [eNB 21, LWAC 24, UE 22, and/or WLAN 20], to use carrier aggregation for signaling with a user equipment [UE 22] in a communication network. Further, there is means, based on the determining, for activating [DP 20A, 21A, 22A, and/or 24A] selected bearers in the communication network for the carrier aggregation. In addition, there is means for coordinating [CA processing 24G, 21G, 22G, and/or 20G] the carrier aggregation in the communication network over the selected bearers comprising sharing responsibilities of packet data protocols handling user data and radio link control functions over the selected bearers.

In the exemplary aspect of the invention according to the paragraph above, wherein the means for determining, activating, and coordinating comprises a non-transitory computer readable medium [MEM 24B, 21B, 22B, and/or 20B] encoded with a computer program [PROG 24C, 21C, 22C, and/or 20C]; and/or [Data of 24G, 21G, 22G, and/or 20G] executable by at least one processor [DP 25A, 21A, 22A, and/or 20A].

The apparatus may be, include or be associated with at least one software application, module, unit or entity configured as arithmetic operation, or as a computer program or portions thereof (including an added or updated software routine), executed by at least one operation processor, unit or module. Computer programs, also called program products or simply programs, including software routines, applets and/or macros, may be stored in any apparatus-readable data storage medium. A computer program product may comprise one or more computer-executable components which, when the program is run, are configured to carry out embodiments described above by means of Figure 7. Additionally, software routines may be downloaded into the apparatus.

The apparatus, such as a node, network device, or user device, or a corresponding component, may be configured as a computer or a microprocessor, such as single-chip computer element, or as a chipset, including or being coupled to a memory for providing storage capacity used for software or arithmetic operation(s) and at least one operation processor for executing the software or arithmetic operation(s).

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. A method comprising:
determining (710), by a network node, to use carrier aggregation for signaling with a user equipment in a communication network;
based on the determining (710), activating (720) selected bearers in the communication network for the carrier aggregation; and
coordinating (730) the carrier aggregation in the communication network over the selected bearers comprising sharing utilization of packet data protocols handling user data and radio link control functions over the selected bearers, wherein
the selected bearers comprise a cellular network carrier and a wireless fidelity carrier, and
said packet data protocols handling user data and radio link control functions include at least one of a packet data convergence protocol and a radio link control protocol,
**characterized in that** the coordinating (730) comprises: linking a functionality of packet data protocols handling user data and radio link control functions over the cellular network carrier and the wireless fidelity carrier, wherein radio link control reports are added to the signaling, and wherein if the reports indicate a routing of a data packet over one of the cellular network carrier or the wireless fidelity carrier is unsuccessful the linked functionality is adapted to enable retransmitting the data packet over another of the cellular network carrier or the wireless fidelity carrier, wherein
said functionality of packet data protocols handling user data and radio link control functions comprises routing a data packet of the signaling over any of the cellular network carrier and the wireless fidelity carrier,
said linking said functionality of packet data protocols handling user data and radio link control functions over the cellular network carrier and the wireless fidelity carrier comprises, for each data packet of the signaling, identify which of the cellular network carrier and the wireless fidelity carrier to route the data packet over for the carrier aggregation, and
the network node operates in one of:
a mode wherein the packet data protocols handling user data are not used for the carrier aggregation and a cellular network radio link control of the network node provides an application programming interface to interact directly with an aggregation controller of the network node, and
a mode where packet data protocols handling user data packets for the carrier aggregated signaling are sent via the network node acting in a transparent mode, in which said network passes said packet data protocols handling user data packets for the carrier aggregated signaling, but doesn't apply normal operations of LTE PDCP to the traffic.

2. The method of claim 1, wherein the determining (710) is based on at least of one of a signal strength, error rate, and interference rate of the cellular network carrier and the wireless fidelity carrier.

3. The method of claim 1, wherein the determining (710) is based on at least one of an operator of the communication network policy configured at the network node, quality of service characteristics associated with the user equipment; radio access capabilities of the user equipment; network performance of a cell, and an availability of a selected carrier for the carrier aggregation.

4. The method of claim 1, wherein the signaling comprises a connection establishment request by the user equipment and wherein the carrier aggregation is used for the connection establishment.

5. The method of claim 1, wherein the activating (720) comprises communicating tunnel endpoint identification information over an interface between network elements relaying user data with a mobility management entity of the communication network to activate the selected bearers, wherein the information is provided by the mobility management entity to a serving gateway of the communication network for the coordinating to direct the selected bearers towards the network node for the carrier aggregation.

6. The method of claim 1, wherein the identifying is based on a traffic type of the signaling, and wherein the identifying is based on at least one of a radio frequency characteristic, detected throughput, delay, and load condition of the wireless fidelity carrier.

7. The method of claim 1, the activating (720) is performed during an ongoing data transmission between the network node and the user equipment, and the method comprising:
determining a loss of coverage of a selected bearer during the ongoing data transmission; and
in response, deactivating the carrier aggregation using that selected bearer, wherein the deactivating comprises communicating with a mobility management entity using an interface between network elements relaying user data to move the signaling from the selected bearer with the loss of coverage.

8. An apparatus comprising means for carrying out the method according to any one of claims 1 to 7.

9. The apparatus of claim 8, wherein the network node is embodied in an LTE/Wi-Fi aggregation controller associated with a base station serving a macro cell in the communication network.

10. A non-transitory computer-readable medium embodying computer program code, the computer program code executable by at least one processor to perform the method of any of claims 1 to 7.

## Patentansprüche

1. Verfahren, umfassend:
Ermitteln (710), durch einen Netzwerkknoten, zur Signalgebung mit einem Endgerät in einem Kommunikationsnetzwerk Trägeraggregation zu verwenden;
auf Grundlage des Ermittelns (710), Aktivieren (720) von ausgewählten Trägern im Kommunikationsnetzwerk für die Trägeraggregation; und
Koordinieren (730) der Trägeraggregation im Kommunikationsnetzwerk über die ausgewählten Träger, was eine gemeinsame Nutzung von Paketdatenprotokollen, die Benutzerdaten und Funkverbindungssteuerfunktionen handhaben, über die ausgewählten Träger umfasst, wobei
die ausgewählten Träger einen Mobilfunknetzträger und einen Wireless-Fidelity-Träger umfassen und
die Paketdatenprotokolle, die Benutzerdaten und Funkverbindungssteuerfunktionen handhaben, mindestens entweder ein Paketdatenkonvergenzprotokoll und/oder ein Funkverbindungssteuerprotokoll enthalten,
**dadurch gekennzeichnet, dass** das Koordinieren (730) umfasst: Verknüpfen einer Funktionalität von Paketdatenprotokollen, die Benutzerdaten und Funkverbindungssteuerfunktionen über den Mobilfunknetzträger und den Wireless-Fidelity-Träger handhaben, wobei Funkverbindungssteuerungsberichte zur Signalgebung hinzugefügt werden und wobei, falls die Berichte anzeigen, dass ein Leiten eines Datenpakets über entweder den Funknetzträger oder den Wireless-Fidelity-Träger erfolglos ist, die verknüpfte Funktionalität angepasst wird, um ein erneutes Senden des Datenpakets über einen anderen vom Funknetzträger oder vom Wireless-Fidelity-Träger zu ermöglichen, wobei
die Funktionalität von Paketdatenprotokollen, die Benutzerdaten und Funkverbindungssteuerfunktionen handhaben, ein Leiten eines Datenpakets der Signalgebung über einen beliebigen vom Funknetzträger oder vom Wireless-Fidelity-Träger umfasst,
wobei das Verknüpfen der Funktionalität von Paketdatenprotokollen, die Benutzerdaten und Funkverbindungssteuerfunktionen über den Mobilfunknetzträger und den Wireless-Fidelity-Träger handhaben, umfasst, für jedes Datenpaket der Signalgebung zu identifizieren, über welchen vom Funknetzträger und vom Wireless-Fidelity-Träger das Datenpaket für die Trägeraggregation zu leiten ist, und
der Netzwerkknoten in einem arbeitet von:
einem Modus, wobei die Paketdatenprotokolle, die Benutzerdaten handhaben, nicht für die Trägeraggregation verwendet werden und eine Mobilfunknetz-Funkverbindungssteuerung des Netzwerkknotens eine Anwendungsprogrammierschnittstelle bereitstellt, um direkt mit einer Aggregationssteuerung des Netzwerkknotens zu wechselwirken, und
einem Modus, bei dem Paketdatenprotokolle, die Benutzerdaten für die trägeraggregierte Signalgebung handhaben, über den Netzwerkknoten gesendet werden, der in einem transparenten Modus tätig ist, bei dem das Netzwerk die Paketdatenprotokolle übermittelt, die Benutzerdatenpakete für die trägeraggregierte Signalgebung handhaben, aber keine normalen Vorgänge von LTE PDCP auf den Verkehr anwendet.

2. Verfahren nach Anspruch 1, wobei das Ermitteln (710) auf mindestens einem von einer Signalstärke, einer Fehlerrate und einer Störungsrate des Mobilfunknetzträgers und des Wireless-Fidelity-Trägers basiert.

3. Verfahren nach Anspruch 1, wobei das Ermitteln (710) auf mindestens entweder einer Vermittlung der am Netzwerkknoten konfigurierten Kommunikationsnetzwerkrichtlinie, mit dem Endgerät verbundenen Dienstqualitätseigenschaften; Funkzugangsfähigkeiten des Endgeräts; Netzwerkleistung einer Zelle und einer Verfügbarkeit eines ausgewählten Trägers für die Trägeraggregation basiert.

4. Verfahren nach Anspruch 1, wobei die Signalgebung eine Verbindungseinrichtungsanforderung vom Endgerät umfasst und wobei die Trägeraggregation für die Verbindungseinrichtung verwendet wird.

5. Verfahren nach Anspruch 1, wobei das Aktivieren (720) ein Kommunizieren von Tunnelendpunktidentifikationsinformationen über eine Schnittstelle zwischen Netzwerkelementen umfasst, die Benutzerdaten mit einer Mobilitätsverwaltungsentität des Kommunikationsnetzwerks weiterleitet, um die ausgewählten Träger zu aktivieren, wobei die Informationen von der Mobilitätsverwaltungsentität an ein Versorgungsgateway des Kommunikationsnetzwerks zum Koordinieren bereitgestellt wird, um die ausgewählten Träger zum Netzwerkknoten für die Trägeraggregation zu lenken.

6. Verfahren nach Anspruch 1, wobei das Identifizieren auf einem Verkehrstyp der Signalgebung basiert und wobei das Identifizieren auf mindestens einem von einem Funkfrequenzmerkmal, einem erkannten Durchsatz, einer Verzögerung und einem Lastzustand des Wireless-Fidelity-Trägers basiert.

7. Verfahren nach Anspruch 1, wobei das Aktivieren (720) während einer laufenden Datenübertragung zwischen dem Netzwerkknoten und dem Endgerät durchgeführt wird und wobei das Verfahren umfasst:
Ermitteln eines Reichweitenverlusts eines ausgewählten Trägers während der laufenden Datenübertragung; und
als Reaktion Deaktivieren der Trägeraggregation unter Verwendung dieses ausgewählten Trägers, wobei das Deaktivieren ein Kommunizieren mit einer Mobilitätsverwaltungsentität unter Verwendung einer Schnittstelle zwischen Netzwerkelementen umfasst, die Benutzerdaten weiterleiten, um die Signalgebung vom ausgewählten Träger mit dem Reichweitenverlust zu verschieben.

8. Vorrichtung, die Mittel zum Durchführen des Verfahrens nach einem der Ansprüche 1 bis 7 umfasst.

9. Vorrichtung nach Anspruch 8, wobei der Netzwerkknoten in einer LTE/Wi-Fi-Aggregationssteuerung ausgebildet ist, die mit einer Basisstation verknüpft ist, die eine Makrozelle im Kommunikationsnetzwerk versorgt.

10. Nicht-transitorisches computerlesbares Medium, das Computerprogrammcode ausbildet, wobei der Computerprogrammcode von mindestens einem Prozessor ausführbar ist, um das Verfahren nach einem der Ansprüche 1 bis 7 durchzuführen.

## Revendications

1. Procédé comprenant :
la détermination (710), par un noeud de réseau, d'utiliser une agrégation de porteuses pour une signalisation avec un équipement d'utilisateur dans un réseau de communication ;
sur la base de la détermination (710), l'activation (720) de porteuses-supports sélectionnées dans le réseau de communication pour l'agrégation de porteuses ; et
la coordination (730) de l'agrégation de porteuses dans le réseau de communication sur les porteuses-supports sélectionnées comprenant le partage de l'utilisation de protocoles de données par paquets qui manipulent des données d'utilisateur et des fonctions de commande de liaison radio sur les porteuses-supports sélectionnées ; dans lequel :
les porteuses-supports sélectionnées comprennent une porteuse de réseau cellulaire et une porteuse de fidélité sans fil ; et
lesdits protocoles de données par paquets qui manipulent des données d'utilisateur et des fonctions de commande de liaison radio incluent au moins un protocole pris parmi un protocole de convergence de données par paquets et un protocole de commande de liaison radio ;
**caractérisé en ce que** la coordination (730) comprend : la liaison d'une fonctionnalité de protocoles de données par paquets qui manipulent des données d'utilisateur et des fonctions de commande de liaison radio sur la porteuse de réseau cellulaire et sur la porteuse de fidélité sans fil, dans lequel des rapports de commande de liaison radio sont ajoutés à la signalisation et dans lequel, si les rapports indiquent qu'un routage d'un paquet de données sur une porteuse prise parmi la porteuse de réseau cellulaire et la porteuse de fidélité sans fil est non couronné de succès, la fonctionnalité liée est adaptée de manière à ce qu'elle permette une émission à nouveau du paquet de données sur une autre porteuse prise parmi la porteuse de réseau cellulaire et la porteuse de fidélité sans fil ; dans lequel :
ladite fonctionnalité de protocoles de données par paquets qui manipulent des données d'utilisateur et des fonctions de commande de liaison radio comprend le routage d'un paquet de données de la signalisation sur une quelconque porteuse prise parmi la porteuse de réseau cellulaire et la porteuse de fidélité sans fil ;
ladite liaison de ladite fonctionnalité de protocoles de données par paquets qui manipulent des données d'utilisateur et des fonctions de commande de liaison radio sur la porteuse de réseau cellulaire et sur la porteuse de fidélité sans fil comprend, pour chaque paquet de données de la signalisation, l'identification de la porteuse prise parmi la porteuse de réseau cellulaire et la porteuse de fidélité sans fil pour router le paquet de données dessus pour l'agrégation de porteuses ; et
le noeud de réseau fonctionne selon un mode pris parmi :
un mode dans lequel les protocoles de données par paquets qui manipulent des données d'utilisateur ne sont pas utilisés pour l'agrégation de porteuses et une commande de liaison radio de réseau cellulaire du noeud de réseau constitue une interface de programmation d'application pour interagir directement avec un contrôleur d'agrégation du noeud de réseau ; et
un mode dans lequel les protocoles de données par paquets qui manipulent des paquets de données d'utilisateur pour la signalisation à porteuses agrégées sont envoyés via le noeud de réseau qui fonctionne dans un mode transparent dans lequel ledit réseau laisse passer lesdits protocoles de données par paquets qui manipulent des paquets de données d'utilisateur pour la signalisation à porteuses agrégées mais n'applique pas des opérations normales de LTE PDCP au trafic.

2. Procédé selon la revendication 1, dans lequel la détermination (710) est basée sur au moins un paramètre pris parmi une intensité de signal, un taux d'erreurs et un taux d'interférences de la porteuse de réseau cellulaire et de la porteuse de fidélité sans fil.

3. Procédé selon la revendication 1, dans lequel la détermination (710) est basée sur au moins un paramètre pris parmi un opérateur de la politique de réseau de communication qui est configurée au niveau du noeud de réseau ; une qualité de caractéristiques de service qui sont associées à l'équipement d'utilisateur ; des capacités d'accès radio de l'équipement d'utilisateur ; une performance d'une cellule en termes de réseau; et une disponibilité d'une porteuse sélectionnée pour l'agrégation de porteuses.

4. Procédé selon la revendication 1, dans lequel la signalisation comprend une requête d'établissement de connexion provenant de l'équipement d'utilisateur et dans lequel l'agrégation de porteuses est utilisée pour l'établissement de connexion.

5. Procédé selon la revendication 1, dans lequel l'activation (720) comprend la communication d'une information d'identification de point de fin de tunnel sur une interface entre des éléments de réseau qui relaient des données d'utilisateur avec une entité de gestion de mobilité du réseau de communication afin d'activer les porteuses-supports sélectionnées, dans lequel l'information est fournie par l'entité de gestion de mobilité à une passerelle de desserte du réseau de communication pour la coordination afin de diriger les porteuses-supports sélectionnées en direction du noeud de réseau pour l'agrégation de porteuses.

6. Procédé selon la revendication 1, dans lequel l'identification est basée sur un type de trafic de la signalisation, et dans lequel l'identification est basée sur au moins un paramètre pris parmi une caractéristique de fréquence radio, un débit détecté, un retard et une condition de charge de la porteuse de fidélité sans fil.

7. Procédé selon la revendication 1, dans lequel l'activation (720) est réalisée pendant une transmission de données en cours entre le noeud de réseau et l'équipement d'utilisateur, et le procédé comprenant :
la détermination d'une perte de couverture d'une porteuse-support sélectionnée pendant la transmission de données en cours ; et
en réponse, la désactivation de l'agrégation de porteuses qui utilise cette porteuse-support sélectionnée, dans lequel la désactivation comprend la communication avec une entité de gestion de mobilité qui utilise une interface entre des éléments de réseau qui relaient des données d'utilisateur afin d'enlever la signalisation au niveau de la porteuse-support sélectionnée qui présente la perte de couverture.

8. Appareil comprenant un moyen pour mettre en oeuvre le procédé selon l'une quelconque des revendications 1 à 7.

9. Appareil selon la revendication 8, dans lequel le noeud de réseau est intégré dans un contrôleur d'agrégation LTE/Wi-Fi qui est associé à une station de base qui joue le rôle de macrocellule dans le réseau de communication.

10. Support lisible par ordinateur non transitoire qui intègre un code de programme d'ordinateur, le code de programme d'ordinateur pouvant être exécuté par au moins un processeur pour réaliser le procédé selon l'une quelconque des revendications 1 à 7.
